# EUROPEAN PATENT APPLICATION

(11) **EP 4 495 810 A1**
(43) Date of publication of application: **22.01.2025**
(21) Application number: 23315288.3
(22) Date of filing: 21.07.2023
(51) Int. Cl.: G06F 21/32, G06V 10/98, G06V 40/50, G06V 40/12, G06V 40/18, G06V 40/16

(54) **BIOMETRIC ENROLLMENT APPARATUS**

(71) Applicant: THALES DIS FRANCE SAS, 92190 Meudon (FR)
(72) Inventor: Swami, Saran, 201002 (IN)
(74) Representative: Quintero Romero, Manuel

(57) **Abstract**

The present invention provides a biometric enrollment apparatus for associating biometric data to a user identity, the apparatus comprising:
- a first capturing module comprising at least one biometric data capturing device;
- a second capturing module comprising at least one biometric data capturing device, the biometric data of this second capturing module being of the same kind as the biometric data of the first capturing module;
- a data processing module configured to
∘ receive biometric data from the first capturing module,
∘ receive biometric data from the second capturing module,
∘ authenticating locally the biometric data from the second capturing module against the data received from the first capturing module, outputting an authentication score;

wherein, only if the authentication score is above a pre-defined score, the data processing module associates the biometric data from the first capturing module to the user identity.

## Description

### TECHNICAL FIELD

The present invention relates to the technical field of foundational IDentity infrastructures and, namely, to the field of user enrollment as the first and critical step to ensure secure and reliable population's (e.g., voter and/or citizen) biometric registration.

### BACKGROUND OF THE INVENTION

Foundational ID systems are general-purpose identity platforms designed to support all forms of ID use cases expected down the line. The Foundational ID systems such as OSIA ("Open Standards Identity APIs"), MOSIP ("Modular Open Source Identity Platform"), or Aadhaar assists Governments and other organizations implement their digital, foundational identity system in a harmonized and cost effective way.

It comprises several general steps and, among them, user enrolment is crucial. This the moment when the user's personal data is collected and processed so that a primary document proving his/her individual identity, such as a new electronic passport (e-PP), national identity card (e-ID), driver's license or voter ID, is created. Today, for official documents, the use of biometrics and face-to-face live enrollment processes are essential.

During civil biometric enrollment process, user's biometric data like finger-prints, iris images or face images are captured, formatting-adapted, quality-checked, associated with the user's identity, and safely stored by the document issuer.

When the enrolled user wishes to prove his identity to perform a transaction, he/she can authenticate him/herself thanks to his/her pre-enrolled biometric data. This step is the so-called biometric authentication or verification step and, typically, this second step takes place much later in time (e.g., months, and sometimes years). This is the case for countries when Governments launch their foundational ID programs. These countries start with the mass civil biometrics enrollment phase and, then, the authentication phase is launched after many months or sometimes years. Moreover, the equipment (or even the vendor) used for the enrollment phase differs from the one used for the verification or authentication.

Therefore, the authentication phase is disjointed from the enrolment phase.

These disjointed phases can give rise to a failed biometric verification at the point of authentication because, for instance, the enrolled biometrics were of low quality or were mis-captured, or there is a malfunction with the authentication or enrollment biometric devices, untested biometric authentication algorithm is used etc.

Then, it is too late to remedy the situation. In this case of general authentication failures, the recommended solution is to recall the users (e.g., citizens) to start over the enrollment process and update their biometric data. This biometric re-enrollment is a cumbersome process in itself incurring logistical costs and time.

Therefore, there is a need in the industry for a streamlined and fool-proofed enrollment process that brings greater convenience to citizens and guarantees the quality of data captured, besides saving logistical costs of re-enrollment

### SUMMARY OF THE INVENTION

The present invention provides a solution for the aforementioned problems by a biometric enrollment apparatus according to claim 1, and a related method according to claim 10. In dependent claims, preferred embodiments of the invention are defined.

The proposed solution integrates the biometric authentication step as part of the biometric enrolment step. This means that the biometric enrolment process is completed only when a successful biometric authentication of the user is performed against the just captured biometrics of the person from a preceding biometric enrollment step.

In a first inventive aspect, the invention provides a biometric enrollment apparatus for associating biometric data to a user identity, the apparatus comprising:
- a first capturing module comprising at least one (first) biometric data capturing device;
- a second capturing module comprising at least one (second) biometric data capturing device, the biometric data of this second capturing module being of the same kind as the biometric data of the first capturing module;
- a data processing module configured to
   ∘ receive biometric data from the first capturing module,
   ∘ receive biometric data from the second capturing module,
   ∘ authenticating locally the biometric data from the second capturing module against the data received from the first capturing module, outputting an authentication score;
   wherein, only if the authentication score is above a pre-defined score, the data processing module associates the biometric data from the first capturing module to the user identity.

The first capturing module allows to enroll the biometric data of the user. In prior art solutions, this information is sent to and processed by (e.g., quality check) the data processing module that executes a registration client software program. Still according to the prior art, if the quality of the captured biometrics data is considered as acceptable (according to pre-established criteria), this data is associated to the user's identity, and forwarded to an official database for its permanent storage as a biometric template associated to the user's identity for its future usage on authentication processes. Automatically after its forwarding to the permanent storage, the registration client software program deletes any local copy of the biometric template.

Unlike this prior art process, the present invention adds a second capturing module with second biometric data capturing device(s) allowing to capture biometric data of the same kind as the biometric data from the first capturing module. In other words, for instance, if the first capturing module comprises devices allowing to capture user's finger-prints (e.g., a 4-4-2 scanner, a multi-fingerprint scanner, or a ten-fingerprint scanner), the second capturing module must comprise also devices (e.g., scanners) to capture user's finger-prints even if each respective module utilizes a different finger-print scanner. The same happens with other kinds of biometric data such as palm-print, iris, face, or voice (i.e., speech), etc.

Therefore, right after capturing user's biometric data through any of the first capturing device(s), and checking the quality of this data through conventional means, the user is prompted to follow on-site a biometric authentication process through some, or all of the device(s) of the second capturing module. This second biometric data is authenticated locally (i.e., by the apparatus itself) against the first biometric data just captured by the first capturing module. Only in case the data matching or authentication is affirmative (i.e., authentication score above a pre-established threshold), the first biometric data is associated to the user's identity and forwarded for its official persistent storage as user's biometric template. In a preferred embodiment, after associating the biometric data from the first capturing module to the user identity, the data processing module securely sends this biometric data to a database of the issuer stored at backend server.

Advantageously, enrolled biometrics are authentication proofed, which greatly reduces the chances of failure at authentication step, when it occurs at a later point in time. It also eliminates the incurred cost of biometric re-enrollment of users. Finally, from user's perspective, it provides a seamless implementation of biometric authentication-based services which, as known, is key for industry general adoption of foundational ID.

Throughout this document, biometric capturing devices of the first capturing module are also referred to as "first" biometric capturing device(s). Similarly, biometric capturing devices of the second capturing module are also referred to as "second" biometric capturing device(s). Nevertheless, for a particular biometrics modality, such as finger-print, both devices first and second scanners can be, or not, 4-4-2 scanners. Both devices can even be, or not, the same commercial product.

In a particular embodiment, the biometric data capturing device (of the first capturing module and/or second capturing module) is at least one the following:
- for finger-print: a 4-4-2 scanner, a multi-fingerprint scanner, a ten-fingerprint scanner or a single fingerprint scanner;
- for palm-print: a palm-print scanner;
- for iris: a dual iris scanner, or a single iris scanner;
- for face: an RGB camera, an Infrared camera, a stereo camera, or a thermo camera;
- for voice: a microphone.

In a particular embodiment, the data processing module executes an authentication client software program configured to perform the tasks typically associated to authentication devices. For instance, it may comprise one or more sub-modules for quality checking, quality enhancement, image cropping, image de-skewing, liveness detection, etc. and, of course, the authentication sub-module to match captured biometric data against a pre-stored one. In some embodiments, the application of some of these sub-modules can render the captured biometric data through the second capturing module as "verification grade biometric data".

This authentication client software program running in the data processing module is then configured to access both the enrollment grade biometric data and the verification grade biometric data in order to perform biometrics matching according to methods of the prior art.

In a preferred embodiment, this second capturing module and authentication client software program are as similar as possible, preferably the same, as the verification devices intended to be deployed on the field in order to authenticate user's through biometric data.

In a preferred embodiment, the data processing module comprises a local database where the biometric data from the first capturing module is temporarily stored until the local authentication process is performed.

This local database is e.g., a small local biometrics database running within the data processing module and storing temporarily the user's enrolment grade biometric data from the first biometric capturing module. That is, the registration client software program acquires biometric data captured through the first capturing means and, optionally, process it up to render it as enrollment grade biometric data. Then, the registration client software program sends this enrollment grade biometric data to the local database for its eventual access by the authentication client software program. Thus, this enrollment grade user's biometric data is accessed by the authentication client software program in order to authenticate the biometric data newly captured through the second capturing module.

In a preferred embodiment, the biometric data captured with the at least one capture device of the second capturing module is discarded (or simply deleted) after the local authentication process is performed.

In a particular embodiment, the data processing module comprises a quality check sub-module configured to assess whether the quality of the biometric data captured with the at least one captures device has an acceptable quality. As mentioned, this quality check sub-module can process biometric data from the first and/or the second modules.

In a particular embodiment, the first and second capturing modules are built-in with the processing module, thus rendering a standalone biometric enrollment device. Otherwise, some of these capturing modules can be operatively connected to central processing means acting as the data processing module such as a laptop, a computer, or a smart handset (e.g., smartphone, tablet). This advantageously improves the modularity and versatility of the invention.

In a particular embodiment, the apparatus is a mobile biometric enrolment device such as tablet, suitcase or other enrolment kit. Alternatively, the apparatus is a static biometric enrolment device such as a pod or kiosk.

Advantageously, the invention can re-use an existing biometric enrollment apparatus and add on top the capturing devices to be used afterwards in the subsequent authentication process. Authentication or biometric data matching capabilities are also needed to be added to the underlying software.

Alternatively, the invention can re-use an existing biometric authentication apparatus and add on top the capturing devices required for the enrollment. An enrollment software need also to be installed pointing to the local database for the temporary storage (waiting for authentication response) instead of directly transferring the template to the issuer's database.

In a second inventive aspect, the invention provides a method to associate biometric data to a user identity, wherein the method comprises:
- providing a biometric enrollment apparatus according to any of the embodiments of the first inventive aspect;
- entering user's personal data such as name, date of birth, and/or address;
- capturing, by at least one of the biometric data capturing device of the first capturing module, an enrolment biometric data of the user;
- capturing, by at least one biometric data capturing device of the second capturing module of the same kind as used by the first capturing module, biometric data of the user;
- authenticating locally, by the data processing module, the biometric data from the second capturing module against the data received from the first capturing module, outputting an authentication score;
wherein, only if the authentication score is above a pre-defined score, the data processing module associates the biometric data from the first capturing module to the user identity.

This local authentication can be effectuated sequentially per biometric modality. That is, a first biometric capturing device can capture user's fingerprints, optionally process them, and store them into the local database. Then, the user can let a second biometric capturing device capture his/her fingerprint(s) (depending on the scanner), optionally process it, and let the apparatus matching this verification grade biometric data against the stored enrollment grade biometric data. If successful, the user is prompted to repeat the process for another required biometric modality such as face, iris, etc.

Alternatively, the apparatus can first capture and process all the required biometric data through the first capturing module and, then, getting the verification grade biometric data and performing data matching one by one. Otherwise, the user can capture sequentially his/her verification biometric data and match it against the pre-stored templates.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a flowchart with a method of capturing and enrolling user's biometric data according to the prior art.
- Figure 2: This figure shows a schematic biometric enrolment apparatus according to the prior art.
- Figure 3: This figure shows a schematic biometric enrolment apparatus according to embodiments of the present invention.
- Figure 4: This figure shows a flowchart with a method of capturing and enrolling user's biometric data according to embodiments of the present invention.

### DETAILED DESCRIPTION OF THE INVENTION

As it will be appreciated by one skilled in the art, aspects of the present invention may be embodied either as biometric enrollment apparatus 10 or as a method to associate biometric data to a user's identity.

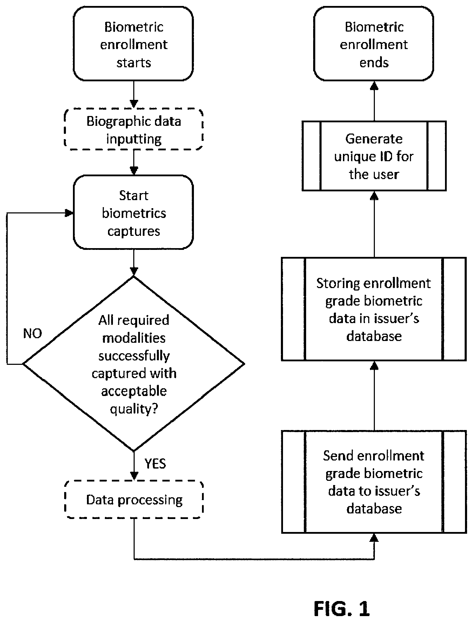

In **figure 1****,** it is represented a flowchart of a prior art method for capturing and enrolling user's biometric data. Depending on the issuer, this may occur through an official and pre-approved biometric enrolment apparatus 10'. This biometric enrolment apparatus normally has a data processing module 5' executing a registration client software program 6'. The operator or staff starts collecting user's personal or biographic data that allows to uniquely identify him/her: name, surname, date of birth, gender, permanent or temporary address, a photograph, etc. This can be done from scratch or, through minimum personal data such as name, surname, and date of birth, the operator can access an issuer's official database to collect the rest of user's information needed for the enrollment. That is, the operator launches the registration client software program, inputs part or all the user's biographic data, and retrieve, or not, the rest from an official issuer's database. The amount of data locally retrieved from the issuer's database to the biometric enrollment apparatus on the field, if any, should be minimized for privacy preserving purposes.

Once the user is uniquely identified, the registration client software program 6' prompts the operator to begin the biometric enrolment process. The kind of biometric data required to be captured depends on the ID foundational program. Sometimes, some issuers (e.g., governments) only requires user's face and fingerprints while others may also require scanning the two iris. The biometric enrolment apparatus has a biometric capturing module 1' equipped with one or more biometric data capturing device(s) 2': scanner(s) for capturing finger-prints 2.1', a scanner for capturing the palm-print, a scanner for capturing iris images 2.2', cameras for capturing face images 2.3', or even a microphone 2.4' for speech capturing.

The registration client software program 6' may guide the operator with the right sequence of capturing biometric data from the user (i.e., in which order the capturing devices are used) or, otherwise, the operator can freely select the kind of biometrics to be captured.

After each biometric capture, optionally (thus represented with dashed lines), the registration client software program performs a quality check over the recorded data to get an enrollment grade biometric data. As each kind of biometric data may need its own post-processing, preferably, this is performed right after each capturing. The operator receives confirmation from the program that the quality is acceptable and moves on with the next biometrics capturing. Otherwise, less advantageously, the data post-processing may occur at once when all the necessary biometric data has been captured.

Once finished, the registration client software program 6' sends this captured biometric data associated to user's identity to the issuer's database 9. A data de-duplication process takes place to eliminate or over-write prior copies of data in order to significantly decrease storage capacity. This database 9 is typically located at backend services hosted by the issuer or a 3^{rd} party of trust.

In an embodiment, for civil biometric enrollment in remote areas with very low or null service, the biometric enrollment apparatus 10' may integrate (or being connected to) a secured local database (not shown) to temporarily store these biometric data associated to users until reaching a connected region. Then, the stored data will be send to the issuer's end.

Once the issuer receives the biometric data associated to the user's identity, it generates a unique ID for that person and internally maps the received data with the actual biometrics field. If a user previously existed in the database, i.e., he/she already had a unique ID, the issuer may generate a new user ID or update the existing one with the new info. Be as it may, the date of this data updating may be also recorded in the issuer's database for traceability purposes.

The biometric enrollment process is then considered as finished.

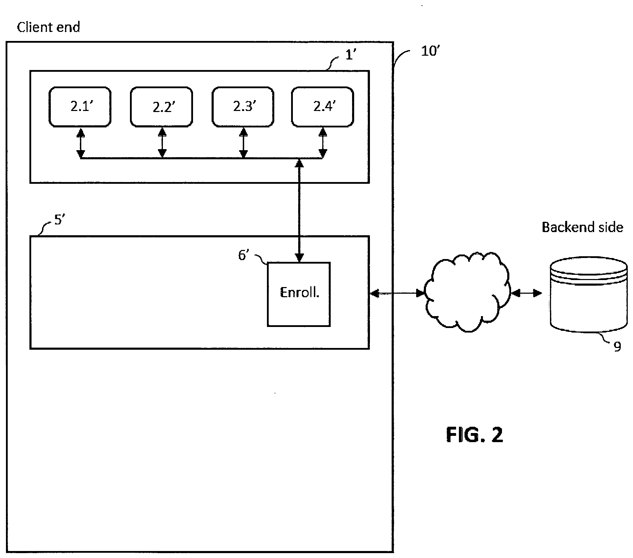

**Figure 2** depicts a schematic biometric enrolment apparatus 10' for associating biometric data to a user identity according to the prior art. This prior art biometric enrollment apparatus comprises: a capturing module 1' comprising biometric data capturing device(s) 2' for one or more kind of biometric enrollments, and a data processing module 5' executing the registration client software program 6'. This apparatus 10' may be a mobile biometric enrolment device such as tablet, a suitcase or other enrolment kit; or, alternatively, the apparatus may be a static biometric enrolment device such as a pod or kiosk placed at official premises such as governmental organization offices, police stations, etc..

The data processing module 5' includes one or several (micro)processors (and/or a (micro)controller(s)), as data processing means (not shown), comprising and/or being connected to one or several memories, as data storing means, comprising or being connected to means for interfacing with the user and operator(s) during the enrollment, such as a Man Machine Interface (or MMI), and comprising or being connected to an Input/Output (or I/O) interface(s) that are internally all connected, through an internal bidirectional data bus.

The I/O interface(s) may include a wired and/or a wireless interface, to exchange, over a contact and/or Contactless (or CTL) link(s), with the enrolling user and the operator(s). The MMI may include a display screen(s), a keyboard(s), a mouse(s), and/or a loudspeaker(s) and allows the operator to interact with the apparatus. The MMI may be used for getting biographic data entered and/or provided by the user. Further, the I/O interfaces comprises the biometric data capturing device(s) 2.1', 2.2', 2.3', 2.4' (e.g., scanner(s), camera(s), reader(s)) of the capturing module 1' configured to capture user's biometric data.

The data processing module 5' further comprises memory(ies) that may include one or several volatile memories and/or one or several non-volatile memories (not shown). The memory(ies) may store data, such as an ID(s) relating to the apparatus 10' or any hosted chip, that allows identifying uniquely and addressing the apparatus; or also non-permanent copies of the recorded biometric data. The memory(ies) also stores the Operating System (OS) and applications which are adapted to provide services to the operator. Among these applications, it has installed a registration client software program 6' able to receive ID enrollment requests from operators, and orchestrate the data exchange between the different MMI and/or capturing devices as well as with the issuer's database 9. As mentioned, the registration client software is also configured to post-process the biometric data captured on site through the capturing devices. This registration client software can be either a service provider application or can be accessed through web browser. In the latter, a secure communication may take place.

The data processing means 5' is configured to send information over a communication network to the backend servers of the issuer or any trusted service provider. In particular, the applications and the backend infrastructure may communicate via one or more Application Program Interfaces, APIs, using HTTP over TLS.

As mentioned, the biometric capturing module 1' comprises a plurality of biometric capturing devices 2.1', 2.2', 2.3', 2.4' that can capture multitude of biometric modalities like finger-print, palm-print, iris, face, voice, or any other modality. These biometric capturing devices are connected to the data processing module through a bidirectional bus.
- A biometric capturing device 2.1' for "-prints" may be a 442 scanner, a multi fingerprint scanner, or a ten-fingerprint scanner; or a palm-print scanner.
- A biometric capturing device 2.2' for iris can be either a dual iris scanner (for capturing the two irises at the same time) or a single iris scanner (for capturing the irises one after the other).

- A biometric capturing device 2.3' for faces can be a RGB camera, a IR camera, a thermos camera or a stereo camera.
- A biometric capturing device 2.4' for other modalities such as voice modality that can be embodied as a speech microphone.

The biometric capturing module may be a monolithic device, thus integrating all the necessary devices into the same element. Otherwise, the biometric capturing module may integrate modularly different devices as plug-ins.

The biometric capturing module 1' may be built-in with the data processing module 5', thus rendering a standalone biometric enrollment device 10'.

After the biometric data of the user is successfully captured, and are of acceptable quality, the registration client software program 6' sends the user's enrollment grade biometric data to the backend database of the issuer (or a 3^{rd} party of trust). As known, the registration client software program itself or other communication module of the data processing module 5' stores keys, certificates, and other data enabling it to contact and authenticate to the backend services. As mentioned, this biometric data transfer can be either on-line (e.g., via the Internet) or off-line as a dumping process.

The backend database 9 stores the user's biometric data after de-duplication with other prior stored biometrics. Finally, the issuer may perform further post-processing on the received user's enrollment grade biometric data before its final or permanent storage.

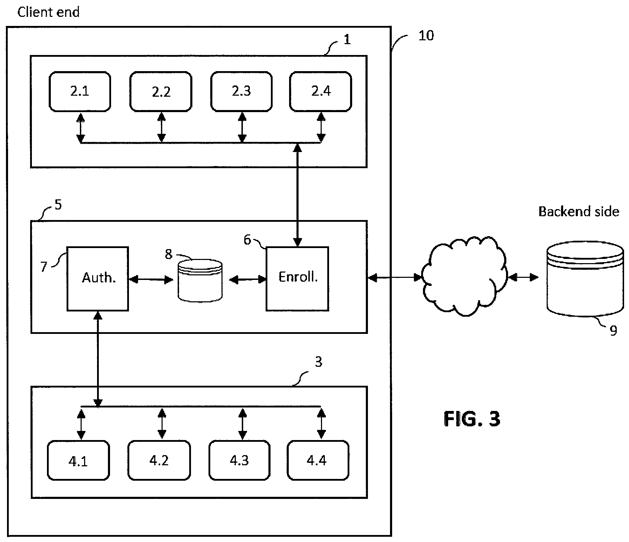

**Figure 3** depicts a schematic biometric enrolment apparatus 10 according to embodiments of the present invention. The biometric enrolment apparatus of figure 3 differs from the one depicted in figure 2 in that, in a broad sense, it further comprises a second biometric capturing module 3 with further capturing devices 4.1, 4.2, 4.3, 4.4 disconnected from the module 1 allowing the (previous) enrolment process. The same references have been used herein for the first capturing module 1, its devices 2.1, 2.2, 2.3, 2.4, and the data processing module 5 and registration program 6; but without " ' ".

The second biometric capturing devices 4.1, 4.2, 4.3, 4.4 are of the same type as those expected to be used on the field during user's identity verification or authentication. Therefore, the authentication devices are field tested during the enrolment process. This helps to deploy already tried and tested authentication devices later-on hereby saving time and resources when the phase of deployment of authentication devices come in foundational ID programs launched by the countries.

The registration client software program 6, once the captured data is at enrolment grade (i.e., after the post-processing is successfully perform and quality is deemed acceptable), instead of transferring it to the issuer's database 9 or being prepared to do so, this enrolment grade biometric data is sent to a temporary local database 8 of the data processing module 5.

The data processing module moves on executing e.g., a *replica* of the authentication client software program 7 of the verification or authentication apparatuses expected to be deployed on the field during the ID foundational program.

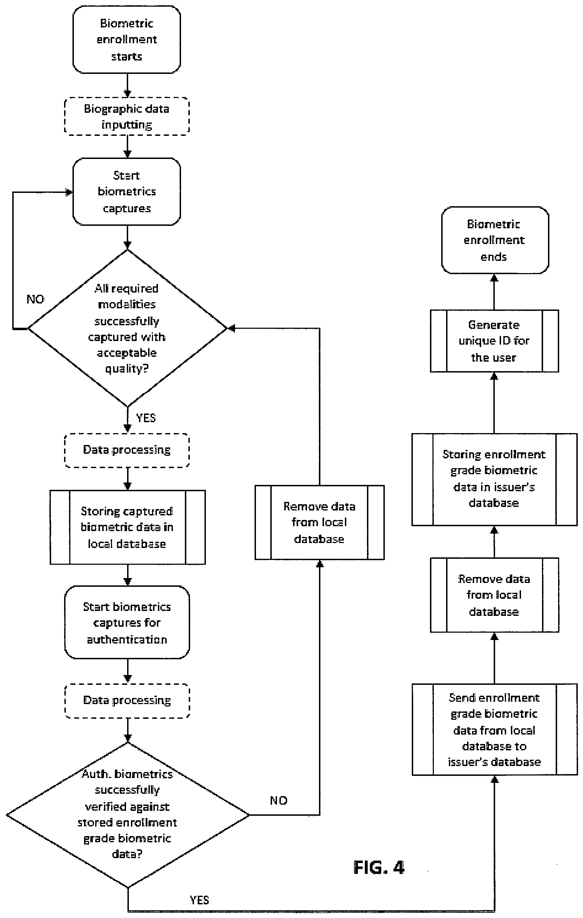

In real life, this authentication client software program 7 can be operated by either a qualified operator or the user him/herself for unattended use cases. Through this example, the authentication client software program will be operated by the same operator as in figures 1 or 2 since it is now part of the upgraded enrolment process described herein (see figure 4). Furthermore, in a normal verification or authentication scenario, the user may (or not) be required to input some of his/her biographic data but, through this upgraded enrolment scenario, there is no need to do so.

The second capturing module 3 in turn comprise its own devices 4.1, 4.2, 4.3, 4.4 for capturing user's biometric data: a single finger scanner (e.g., Thales Cogent Single Finger Scanner DactyID20), a thumb scanner, palm scanner (such as Cogent Palm Scanner CS500q), or a multi-finger scanner (e.g., Cogent Multi finger Scanner Dactyscan84c or CS500f), normal visible cameras, and/or an iris scanner, etc. The second capturing module comprises devices able to capture biometric data of at least the same modality as used by the first biometric capturing module.

Then, the authentication client software program 7 prompts the user to let the respective capturing devices 4.1, 4.2, 4.3, 4.4 capture his/her biometric data giving instructions as necessary. After each capture, the authentication client software program 7 may post-process the captured biometric data for being better digested by a matching algorithm (e.g., using Convolutional Neural Networks, CNN). These post-processing means (not shown) may be, or not, the same means as used by the registration client software and, preferably, it should be the same as expected to be used on the field. This renders the captured data as user's verification grade biometric data.

The authentication client software program 7 then retrieves the user's enrollment grade biometric data previously stored locally in the database 8 of the data processing module 5. Finally, it 7 matches or authenticates the just captured user's verification grade biometric data against the just retrieved enrollment grade biometric data and yields the authentication results of "match" or "no match". Additionally it may also output a matching score. A successful authentication depends on whether the matching score surpasses a pre-established threshold according to prior art techniques.

This capturing, post-processing and matching is performed individually per each piece of biometric data. For instance, if the second capturing module is simply equipped with a single fingerprint scanner, the user is then prompted to follow and repeat this process for each and every individual finger in a sequential manner.

The same applies for the rest of applicable biometric modalities depending on the use case.

Only after all the pieces of user's biometric data are authenticated against the stored enrollment grade biometric data in the local database, the authentication step is complete. In turn, only after the authentication step is complete, the stored enrollment grade biometric data are again retrieved and then transported by the registration client software program in a usual manner for de-duplication and permanent storage at backend database(s).

**Figure 4** depicts a flowchart with a method of capturing and enrolling user's biometric data according to embodiments of the present invention. This process is carried out by, for instance, an apparatus according to figure 3.

The first steps of the process are similar to those shown in figure 1. But, instead of transferring the enrollment grade biometric data to the issuer's database for its official and permanent storage alike the prior art; now the data processing means locally and temporarily stores them into the local database.

The upgraded enrollment process continues with the local authentication process where the user's verification grade biometric data are captured using the second capturing module together with the authentication client software program. These verification grade biometric data are individually authenticated against the recently stored enrollment grade biometric data in the temporary local database. If the matching is successful, it means that an eventual authentication step on the field will be also successful and that the enrollment grade biometric data stored in the local database are tested and hereby authentication proof.

Once the local authentication is complete for all the enrollment grade biometric data stored in the local database, these are sent to the backend database as for future use in authentication phase. Otherwise, i.e., if the authentication fails, the user's biometric enrolment starts over and the enrollment grade biometric data of the local database is erased. This enrollment process can be iteratively done until the local authentication passes.

Be the case as it may, the local database will be erased after the successful user's enrollment to comply with data privacy and minimization.

In this way, the user's biometric data is of acceptable quality, verifiable and deem ready to be stored permanently for future authentication uses.

## Claims

1. A biometric enrollment apparatus (10) for associating biometric data to a user identity, the apparatus comprising:
- a first capturing module (1) comprising at least one biometric data capturing device (2.1, 2.2, 2.3, 2.4);
- a second capturing module (3) comprising at least one biometric data capturing device (4.1, 4.2, 4.3, 4.4), the biometric data of this second capturing module being of the same kind as the biometric data of the first capturing module (1);
- a data processing module (5) configured to
∘ receive biometric data from the first capturing module,
∘ receive biometric data from the second capturing module,
∘ authenticating locally the biometric data from the second capturing module against the data received from the first capturing module, outputting an authentication score;
wherein, only if the authentication score is above a pre-defined score, the data processing module associates the biometric data from the first capturing module to the user identity.

2. The biometric enrollment apparatus according to claim 1, wherein the kind of biometric data captured by the first (1) and second (3) capturing modules is at least one of the following: finger-print, palm-print, iris, face, or voice.

3. The biometric enrollment apparatus according to claim 2, wherein the biometric data capturing device is at least one the following:
- for finger-print: a 4-4-2 scanner, a multi-fingerprint scanner, or a ten-fingerprint scanner;
- for palm-print: a palm-print scanner;
- for iris: a dual iris scanner, or a single iris scanner;
- for face: an RGB camera, an Infrared camera, a stereo camera, or a thermo camera;
- for voice: a microphone.

4. The biometric enrollment apparatus according to any of claims 1 to 3; wherein after associating the biometric data from the first capturing module to the user identity, the data processing module securely sends this biometric data to a database 9 of the issuer stored at backend server.

5. The biometric enrollment apparatus according to any of claims 1 to 4, wherein the data processing module comprises a local database 8 where the biometric data from the first capturing module is temporarily stored until the local authentication process is performed.

6. The biometric enrollment apparatus according to any of claims 1 to 5, wherein the biometric data captured with the at least one biometric data capturing device of the second capturing module is discarded after the local authentication process is performed.

7. The biometric enrollment apparatus according to any of claims 1 to 6, wherein the data processing module 5 comprises a quality check sub-module configured to assess whether the quality of the biometric data captured with the at least one biometric capturing device (2.1, 2.2, 2.3, 2.4; 4.1, 4.2, 4.2, 4.4) of the first (1) and/or second (3) capturing module has an acceptable quality.

8. The biometric enrollment apparatus according to any of claims 1 to 7, wherein the first (1) and second (3) capturing modules are built-in with the data processing module (5).

9. The biometric enrollment apparatus according to any of claims 1 to 8, wherein the apparatus (10) is one of the following: a mobile biometric enrolment device such as tablet, suitcase or other enrolment kit or a static biometric enrolment device such as a pod or kiosk.

10. A method to associate biometric data to a user identity, wherein the method comprises:
- providing a biometric enrollment apparatus according to any of claims 1 to 9;
- entering user personal data such as name, date of birth, and/or address;
- capturing, by at least one of the biometric data capturing device of the first capturing module, an enrolment biometric data of the user;
- capturing, by at least one biometric data capturing device of the second capturing module of the same kind as used by the first capturing module, biometric data of the user;
- authenticating locally, by the data processing module, the biometric data from the second capturing module against the data received from the first capturing module, outputting an authentication score;
wherein, only if the authentication score is above a pre-defined score, the data processing module associates the biometric data from the first capturing module to the user identity.
